(19) Europäisches Patentamt / European Patent Office / Office européen des brevets

(11) **EP 4 517 700 B1**

(12) **EUROPEAN PATENT SPECIFICATION**

(45) Date of publication and mention
of the grant of the patent:
**20.05.2026 Bulletin 2026/21**

(21) Application number: **22968242.2**

(22) Date of filing: **16.12.2022**

(51) International Patent Classification (IPC):
*G06V 40/00* (2022.01)   *G06V 40/10* (2022.01)
*G06V 40/16* (2022.01)   *G06V 20/59* (2022.01)

(52) Cooperative Patent Classification (CPC):
**G06V 20/59; G06V 20/593; G06V 40/10;**
G06V 40/161

(86) International application number:
**PCT/CN2022/139613**

(87) International publication number:
**WO 2024/124536 (20.06.2024 Gazette 2024/25)**

(54) **SAFETY BELT WEARING DETECTION METHOD AND APPARATUS, ELECTRONIC DEVICE AND STORAGE MEDIUM**

VERFAHREN UND VORRICHTUNG ZUR ERKENNUNG DES TRAGENS EINES SICHERHEITSGURTS, ELEKTRONISCHE VORRICHTUNG UND SPEICHERMEDIUM

PROCÉDÉ ET APPAREIL DE DÉTECTION DE PORT DE CEINTURE DE SÉCURITÉ, DISPOSITIF ÉLECTRONIQUE ET SUPPORT DE STOCKAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**05.03.2025 Bulletin 2025/10**

(73) Proprietors:
• **Boe Technology Group Co., Ltd.
Beijing 100015 (CN)**
• **Chengdu Boe Smart Technology Co., Ltd.
Chengdu, Sichuan 611731 (CN)**

(72) Inventors:
• **PENG, Yuzhou
Beijing 100176 (CN)**
• **LAN, Ronghua
Beijing 100176 (CN)**

(74) Representative: **Hoffmann Eitle
Patent- und Rechtsanwälte PartmbB
Arabellastraße 30
81925 München (DE)**

(56) References cited:
WO-A1-2022/135589   CN-A- 104 417 489
CN-A- 104 417 489   CN-A- 104 417 490
CN-A- 105 117 696   CN-A- 107 330 367
CN-A- 111 582 077   CN-A- 113 486 835
CN-A- 113 553 938   CN-B- 106 709 443
JP-A- 2019 069 725   US-A1- 2021 209 385
US-A1- 2024 062 557

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to the field of data processing technologies, and in particular, to a seat belt wearing detection method and apparatus, an electronic device and a storage medium.

BACKGROUND

With the rapid growth of urban economy and the acceleration of urbanization, traffic safety has become a major problem in the field of urban transportation in countries. In order to ensure safe driving as much as possible and reduce the casualty rate in traffic accidents, people in vehicles are required to wear seat belts. However, in the actual driving process of the vehicle, there may be situations where people in the vehicle forget to wear seat belts, or deliberately do not wear seat belts, which will bring great safety hazards. Therefore, how to effectively detect the wearing situation of the seat belt is a technical problem that needs to be solved urgently at present.

WO 2022/135589 A1 discloses a method and apparatus for detecting the wearing of a safety belt, and a storage medium and a processor. The method comprises: acquiring a target image collected from a traffic device; determining a first image area and/or a second image area in the target image, wherein the first image area is an area where the head of a target object is located in the target image, and the second image area is an area where the face of the target object is located in the target image; determining a third image area according to the first image area and/or the second image area, wherein the third image area is a safety belt wearing area in the target image; and determining, according to image information in the third image area, whether the manner in which a safety belt is being worn in the target image meets a preset wearing requirement.

US 2021/209385 A1 discloses a method and an apparatus for recognizing a wearing state of a safety belt are disclosed. The method includes: obtaining an image by monitoring a vehicle; performing face recognition on the image to obtain a face region; determining a target region from the image based on a size and a position of the face region; and recognizing a wearing state of a safety belt based on an image feature of the target region.

CN106709443B discloses a method for detecting the wearing state of a safety belt and a terminal. The method comprises the steps of according to an acquired color image and an acquired depth information graph, determining a face region of a user in the color image; determining a safety belt region in the color image according to the face region; performing straight line detection on the safety belt region, and determining candidate straight lines in the safety belt region; judging the effectiveness of the candidate straight lines by combining the depth information graph provided by a 3D camera, and determining the wearing state of the safety belt. By adopting the technical scheme provided by the embodiment of the invention, the detection robustness of the face region can be improved through the color image and the depth information graph, so that the accuracy of safety belt region demarcation can be improved. Meanwhile, the accurate straight line detection method and the mode of judging the effectiveness of the straight lines by combining depth information improves the robustness of safety belt recognition while reducing the dependency for parameter adjustment compared with a traditional method, thereby having important application values.

CN104417489A discloses an automobile safety belt detection method. The method comprises the steps of: determining a target region which comprises a driver image in an to-be-detected image; selecting a parallel linear region in line with a preset criteria from the target region, and determining the parallel linear region as a region to be detected; when the parallel linear region does not exist, determining that a driver does not wear a safety belt; using a region growing algorithm to determine whether the region to be detected is consistent, when the region is consistent, determining that the driver wears the safety belt, and when the region does not consistent, determining that the driver does not wear the safety belt; and the outputting a detection result. The invention also provides an automobile safety belt detection device. According to the method and the device, whether the driver wears the safety belt can be accurately identified.

SUMMARY

In an aspect, the present disclosure provides a seat belt wearing detection method which is defined by claim 1.

In yet another aspect, the present disclosure provides an electronic device which is defined by claim 9.

In yet another aspect, the present disclosure provides a non-transitory computer-readable storage medium which is defined by claim 12.

In still another aspect, the present disclosure provides a computer program product which is defined by claim 13.

In still another aspect, the present disclosure provides a computer program which is defined by claim 14.

Further advantageous embodiments of the present disclosure are indicated in the dependent claims.

# EP 4 517 700 B1

## BRIEF DESCRIPTION OF THE DRAWINGS

In order to describe technical solutions in the present disclosure more clearly, the accompanying drawings to be used in some embodiments of the present disclosure will be introduced briefly. Obviously, the accompanying drawings to be described below are merely drawings of some embodiments of the present disclosure, and a person of ordinary skill in the art obtains other drawings according to those drawings. In addition, accompanying drawings in the following description may be regarded as schematic diagrams, and are not limitations on an actual size of a product, an actual process of a method and an actual timing of signals involved in the embodiments of the present disclosure.

FIG. 1 is a structural diagram of a seat belt wearing detection system, in accordance with some embodiments;
FIG. 2 is a structural diagram of an interior of a vehicle, in accordance with some embodiments;
FIG. 3 is a flow diagram of a seat belt wearing detection method, in accordance with some embodiments;
FIG. 4 is another flow diagram of a seat belt wearing detection method, in accordance with some embodiments;
FIG. 5 is yet another flow diagram of a seat belt wearing detection method, in accordance with some embodiments;
FIG. 6 is a schematic diagram of a method for determining location information of a human body region image, in accordance with some embodiments;
FIG. 7 is yet another flow diagram of a seat belt wearing detection method, in accordance with some embodiments;
FIG. 8 is a flow diagram of a training method of a model, in accordance with some embodiments;
FIG. 9 is yet another flow diagram of a seat belt wearing detection method, in accordance with some embodiments;
FIG. 10 is yet another flow diagram of a seat belt wearing detection method, in accordance with some embodiments;
FIG. 11 is a structural diagram of a seat belt wearing detection apparatus, in accordance with some embodiments; and
FIG. 12 is a structural diagram of an electronic device, in accordance with some embodiments.

## DETAILED DESCRIPTION

The technical solutions in some embodiments of the present disclosure will be described clearly and completely with reference to the accompanying drawings; obviously, the described embodiments are merely some but not all of embodiments of the present disclosure. All other embodiments obtained on the basis of the embodiments of the present disclosure by a person of ordinary skill in the art shall be included in the protection scope of the present disclosure.

In addition, in the present disclosure, the term such as "exemplary" or "for example" is used to present an example, illustration, or explanation. Any embodiment or design solution described herein with "exemplary" or "for example" in the present disclosure is not necessarily to be construed as preferred or advantageous over other embodiments or design solutions. Rather, the use of the term such as "exemplary" or "for example" is intended to present relevant concepts in a specific manner. Unless the context requires otherwise, throughout the description and claims, the term "comprise" and other forms thereof such as the third-person singular form "comprises" and the present participle form "comprising" are construed as an open and inclusive meaning, i.e., "included, but not limited to".

In addition, in the description of the present application, unless otherwise specified, "/" means "or"; for example, A/B may mean A or B. Herein, "and/or" merely describes an association relationship of associated objects, and represents three kinds of relationships; for example, "A and/or B" represents three situations: only A, both A and B, or only B. In addition, "at least one" means one or more, and "plurality" means two or more.

In addition, the use of the phrase "based on" is meant to be open and inclusive, since a process, step, calculation or other action that is "based on" one or more of the stated conditions or values may, in practice, be based on additional conditions or values beyond those stated.

As mentioned in the background, with the acceleration of urbanization, traffic safety has become a major problem in the field of urban traffic in countries. In order to ensure safe driving as much as possible and reduce the casualty rate in traffic accidents, people in vehicles are required to wear seat belts. However, in the actual driving process of the vehicle, there may be situations where people in the vehicle forget to wear the seat belt, or deliberately do not wear the seat belt, which will bring great safety hazards. Therefore, how to effectively detect the wearing situation of the seat belt is a technical problem that needs to be solved urgently at present.

In the related art, sensors are installed in the seat to detect whether people in the vehicle are wearing seat belts. For example, in a case where the latch plate of the seat belt is inserted into the buckle to be locked, the system automatically confirms that the passenger has fastened the seat belt; otherwise, if it detects that the latch plate is not inserted into the buckle, the system confirms that the driver or passenger is not fasten the seat belt and generates an alarm.

However, in a case where the detection for wearing of seat belt is performed in this manner, and people in the vehicle does not want to wear a seat belt, people may sit directly on the seat with the seat belt is fastened or insert a separately purchased latch plate into the buckle, causing the vehicle system to misinterpret the seat belt as being worn. Therefore, the accuracy of seat belt wearing detection is low, and the driving safety cannot be well protected.

Based on this, embodiments of the present disclosure provide a seat belt wearing detection method, and the method includes: performing face detection on an image to be detected to obtain position information of one or more face detection boxes; recognizing a target face detection box located in a preset seat region from the one or more face detection boxes based on the position information of the one or more face detection boxes; cropping the image to be detected to obtain an target human body image corresponding to the target face detection box based on position information of the target face detection box; segmenting the target human body image to obtain a seat belt region image; and determining whether a person corresponding to the target human body image wears a seat belt based on the seat belt region image.

It will be seen that the core technology is that, in a case where it is detected that a person in a vehicle is located in a preset seat region (that is, in a case where a target face detection box located in a preset seat region is recognized), an image to be detected is segmented to obtain a target human body image of the person, and then whether the corresponding person wears a seat belt is determined according to a seat belt region image in the target human body image. In this way, it does not rely on the sensor in the seat, which may reduce the detection errors due to active human circumvention of detection (e.g., purchasing a separate latch plate and inserting the latch plate into the buckle), so that the accuracy of seat belt wearing detection is improved. As a result, the driving safety is improved. In addition, in a case where the person in the vehicle is located in the preset seat region, whether the person wears the seat belt is detected, which reduces the calculation amount of detection and improves the efficiency of seat belt wearing detection. Moreover, since the seat belt wearing detection is performed in a case where the person is located in the preset seat region, in a case where the picture displayed by the image to be detected includes a person outside the preset seat region, such as a pedestrian outside the car window, it is not detected. Thus, it is possible to avoid the occurrence of false detection results due to the seat belt wearing detection is performed on the person outside the preset seat region.

In order to illustrate the solution provided by the embodiments of the present disclosure more clearly, the application scenario of the seat belt wearing detection method provided by the embodiments of the present disclosure will be firstly described below.

The seat belt wearing detection method provided in the embodiments of the present disclosure is applied to any scene requiring seat belt detection. Optionally, it is used to detect whether the driver or passenger in the vehicle wears the seat belt during the driving of the vehicle. Optionally, it is also extended to other scenarios where seat belt detection exists; for example, in a case where entertainment facilities (e.g., cable cars, roller coasters and other high-altitude entertainment facilities) are used, it is also possible to perform the seat belt wearing detection based on the seat belt wearing detection method provided in the embodiments of the present application. It will be understood that the specific application scenarios of the seat belt wearing detection method are not limited in the present disclosure.

In addition, the seat belt wearing detection method provided in the embodiments of the present disclosure is executed by any device with a processing function, and the execution subject of the seat belt wearing detection method are not limited in the present disclosure. For example, the execution subject may be a server. For another example, the execution subject may be a vehicle-mounted host. For yet another example, the execution subject may be an electronic chip with a processing function, such as a graphics processing unit (GPU). For yet another example, the execution subject may be a mobile phone, a tablet computer, a desktop, a laptop, a handheld computer, a notebook computer, an ultra-mobile personal computer (UMPC), a netbook, a cellular phone, a personal digital assistant (PDA), an augmented reality (AR) device, or a virtual reality (VR) device. Optionally, the execution subject has one or more of a photographing function, a storage function, or a communication function. It will be understood that the specific form of the executing subject of the seat belt wearing detection method are not limited in the present disclosure.

In order to facilitate the understanding of the solution, a possible seat belt wearing detection system is introduced below by taking a vehicle driving scene as an example. The seat belt wearing detection system implements the seat belt wearing detection method provided in the embodiments of the present disclosure.

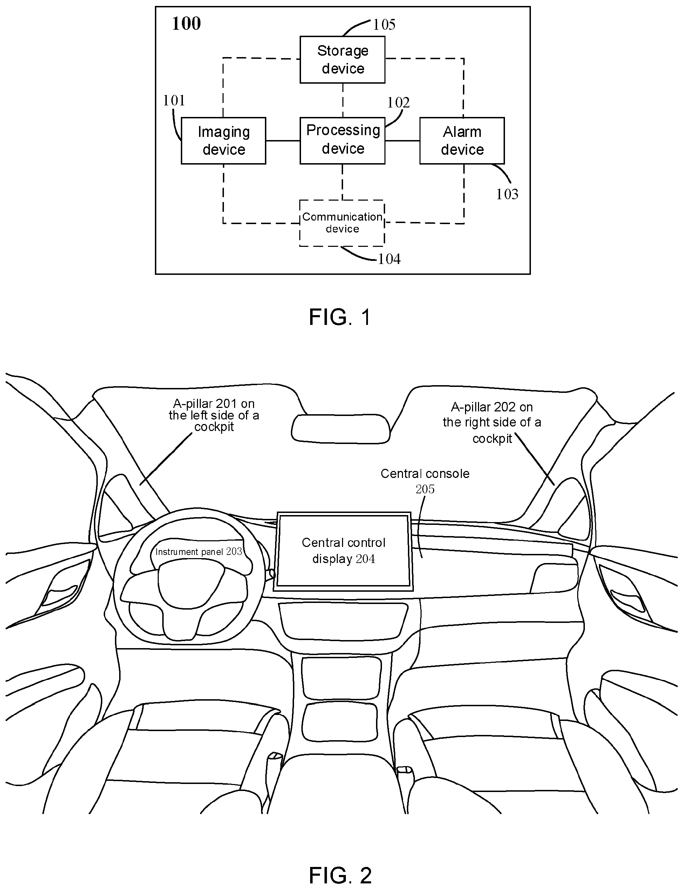

FIG. 1 shows a seat belt wearing detection system 100, in accordance with some embodiments. Referring to FIG. 1, the seat belt wearing detection system 100 includes an imaging device 101 and a processing device 102. There is a wired or wireless communication connection between the imaging device 101 and the processing device 102. In some embodiments, the seat belt wearing detection system 100 further includes one or more of an alarm device 103, a communication device 104 and a storage device 105.

The imaging device 101 includes at least one camera for capturing and generating at least one frame of original image, for example, for capturing and generating a surveillance video, and the surveillance video includes at least one frame of original image. Further, the imaging device 101 sends the data of the generated original image to the processing device 102 or the storage device 105.

In some examples, the imaging device 101 is disposed inside the vehicle, and a capturing region of the imaging device 101 includes a preset seat region. For example, referring to the structural diagram of the interior of the vehicle shown in FIG. 2, the imaging device 101 is disposed at least one of following positions: A-pillar(s) of a cockpit (A-pillar 201 on the left side and/or A-pillar 202 on the right side of the cockpit), an instrument panel 203, a reading lamp (not shown in the figure), a central control display 204 or a central console 205. Further, the position of the imaging device 101 is arranged to cause the imaging device 101 shall, as far as possible, not block the driving view. In a specific example, the imaging device 101 is disposed on an interior trim panel of the A-pillar of the cockpit, and the imaging device 101 is arranged so as not to block the driving field of view near the A-pillar. It will be understood that the installation position of the imaging device 101 is only an example, as long as it is ensured that after the imaging device 101 is installed, the capturing region of the imaging device 101 covers the preset seat region of the vehicle, and the present disclosure does not specifically limit thereto.

In some examples, the imaging device 101 may be one camera, or a collection of multiple cameras. For example, one or more cameras may be arranged at the same position. For another example, the multiple cameras may be respectively arranged at different positions in the vehicle. The number of cameras included in the imaging device 101 is not limited in the embodiments of the present disclosure.

The processing device 102 is used to: receive the original image captured by the imaging device 101, or acquire the original image captured by the imaging device 101 from the storage device 105; and analyze and detect the original image. In some examples, the processing device 102 performs affine transformation on the original image, so that the preset seat region is adjusted to be in the middle of the image after the affine transformation (i.e., the image to be detected) through the affine transformation. In some other examples, the processing device 102 does not perform affine transformation on the original image, but directly use the original image as the image to be detected. In some examples, the processing device 102 is used to determine whether a person in the vehicle wears a seat belt by analysis and detection. Further, the processing device 102 also determines whether an alarm is required according to the analyzed and detected results. For example, if it is detected that the person in the vehicle does not wear the seat belt, the alarm device 103 is notified to perform a corresponding alarm.

In some examples, the processing device 102 is used to perform the seat belt wearing detection method and achieve possible implementations of the seat belt wearing detection method shown below.

In some examples, the processing device 102 implements one or more of the following functions: preprocessing the image to be detected, such as denoising, sharpening, to improve the clarity of the image to be detected; performing face recognition on the image to be detected to obtain a face detection box of each person in the image to be detected; determining whether the person corresponding to the face detection box is located in the preset seat region based on the position of the obtained face detection box in the image to be detected and the position of the preset seat region; segmenting the image to be detected to obtain a target human body image corresponding to the face detection box based on the position of the obtained face detection box; detecting whether there is a seat belt in the image to be detected or the target human body image in the image to be detected; detecting the position of the seat belt in the image to be detected or the target human body image in the image to be detected; determining the slope of the seat belt in the image to be detected or the target body image in the image to be detected based on image recognition; determining whether the person corresponding to the face detection box wears the seat belt in a case where the face detection box detected in the image to be detected is located in the preset seat region; detecting whether the vehicle is in a driving state; in a case where the person in the seat region does not wear the seat belt, instructing the alarm device 103 to give an alarm.

It will be understood that the processing device 102 is any device with processing functions, such as a vehicle host, computer equipment, server, chip system, circuit or other discrete devices, as long as the processing device 102 can realize the seat belt wearing detection method and other possible implementation provided by the embodiments of the present disclosure, which is not specifically limited in the present disclosure.

The alarm device 103 is used to receive an instruction from the processing device 102 and perform a corresponding alarm operation.

In some examples, the alarm device 103 includes one or more of a strobe device, a display device, an audio device or a vibration device. Further, optionally, the alarm device 103 prompts the alarm information in the form of text, animation, strobe, voice, buzzer, or vibration.

The communication device 104 is used to implement at least one of the following functions: interactive communication with other devices, communication with the internet, or communication between various devices in the seat belt wearing detection system 100. For example, the communication device 104 communicates with the user's terminal equipment, so that the alarm device 103 sends the alarm information indicating that the seat belt is not worn to the user's terminal equipment through the communication device 104. For another example, the communication device 104 receives update information from the internet, and the update information is used to update the relevant algorithms of the seat belt wearing detection method provided in the embodiments of the present disclosure. For another example, the communication device 104 implements communication between the imaging device 101 and the processing device 102. For another example, the communication device 104 implements communication between the processing device 102 and the alarm device 103.

The storage device 105 is used to store one or more of the following information: the original image or surveillance video generated by the imaging device 101; the position of the preset seat region; the surveillance video captured by the imaging device 101; the algorithm resources required in the detecting process of the processing device 102; the detected results of the processing device 102, such as the position of the face detection box obtained by face recognition, the semantic information of each pixel in the image, the position of the seat belt, the slope of the seat belt; program instructions for performing the seat belt wearing detection method; or alarm information.

It will be noted that one or more of the aforementioned imaging device 101, processing device 102, alarm device 103, communication device 104, and storage device 105 is arranged independently or integrated. For example, the imaging device 101 and the processing device 102 are integrated arranged. For another example, the processing device 102 and the alarm device 103 are integrated arranged. For another example, the processing device 102 and the storage device 105 are integrated arranged. For another example, the imaging device 101, the processing device 102, and the alarm device 103 are integrated arranged. For another example, the imaging device 101, the processing device 102, the alarm device 103, the communication device 104, and the storage device 105 are integrated arranged. Those skilled in the art perform combined arrangement according to actual needs, which will not be listed here, and will not be specifically limited in the present disclosure.

It will be understood that the various devices of the seat belt wearing detection system shown in FIG. 1 are only examples, and there are other devices in actual applications. For example, although not shown in FIG. 1, the seat belt wearing detection system 100 further includes a power supply device (e.g., a battery and a power management chip) to supply power to various devices of the seat belt wearing detection system 100.

In addition, those of ordinary skill in the art know that the technical solutions provided in the embodiments of the present disclosure are also applicable to similar technical problems. For example, in a case where the seat belt wearing detection method provided by the embodiments of the present disclosure is applied to the seat belt wearing detection in the cable car facility scene, similar to arranging the imaging device 101 inside the vehicle in the vehicle driving scenario, the imaging device 101 is disposed at a position inside a cable car in the cable car facility scenario, so that the capturing region covered by the captured image to be detected includes the preset seat region. It will be understood that the systems and scenarios introduced in the embodiments of the present disclosure are for more clearly illustrating the technical solutions of the embodiments of the present disclosure, and do not constitute limitations on the technical solutions provided by the embodiments of the present disclosure.

The solutions in the present disclosure will be described in detail with reference to the accompanying drawings below.

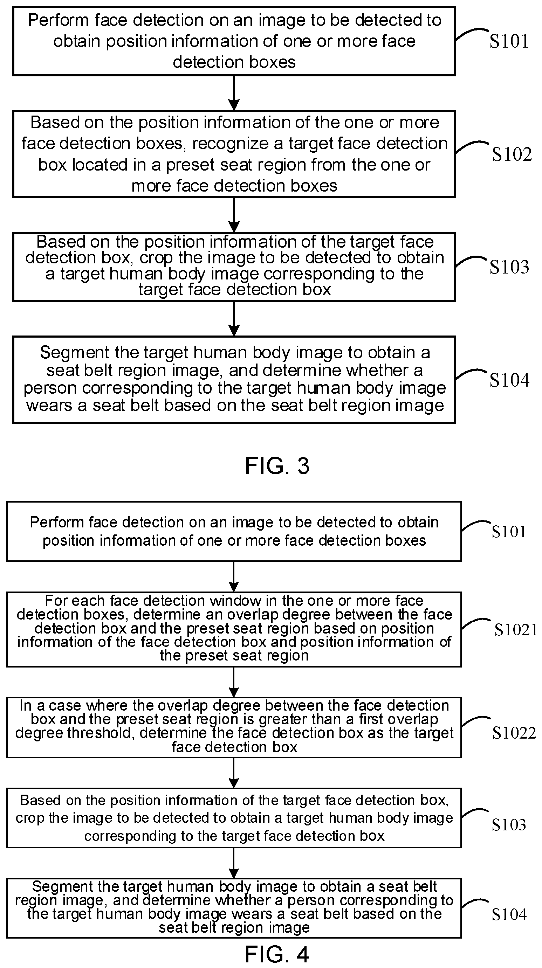

FIG. 3 is a seat belt wearing detection method proposed by the embodiments of the present disclosure. The method provided by the embodiments of the present disclosure will be described in detail by taking an example in which the executing subject is the processing device shown in FIG. 2. As shown in FIG. 3, the seat belt wearing detection method includes following steps S101 to S104.

In S101, face detection is performed on an image to be detected to obtain position information of one or more face detection boxes.

In some embodiments, the image to be detected may be a multi-channel image, for example, a color image such as an RGB image or a YUV image. Alternatively, the image to be detected may be a single-channel image, such as a brightness image. The type of the image to be detected is not specifically limited in the embodiments of the present disclosure.

In some embodiments, the image to be detected is acquired by the processing device from the imaging device. For example, the processing device is connected to the imaging device, and the processing device acquires an original image captured by the imaging device disposed inside the vehicle (e.g., at least one of the A-pillar of a cockpit, the instrument panel, the reading light, the center control display or the central console) and whose capturing region includes a preset seat region.

Optionally, the processing device uses the original image as the image to be detected.

Optionally, after the original image is preprocessed by the processing device, the preprocessed image is used as the image to be detected. For example, in a case where the capturing region of the original image captured by the imaging device includes the preset seat region, affine transformation is performed on the captured original image, so that the preset seat region is located in the middle of the affine transformed image, and the affine transformed image is used as the image to be detected. In this way, the accuracy of detecting the image to be detected (e.g., face detection) in the subsequent process is improved.

It will be understood that, in a case where the processing device is integrated with the imaging device, the processing device acquires the image to be detected from itself.

In some other embodiments, the image to be detected is obtained by the processing device from the storage device. For example, the processing device is connected to the storage device; the storage device stores the original image therein; the processing device reads the original image from the storage device, and uses the original image as the image to be detected, or preprocesses (e.g., affine transformation) the original image and takes it as the image to be detected. As for the processing of the affine transformation, reference is made in the description above, and will not be repeated here.

Optionally, the storage device stores a surveillance video therein, and the surveillance video includes at least one frame of original image; the processing device reads the original image from the storage device frame by frame or skip frame (e.g., reading the original image once every preset number of frames), which is not specifically limited in the present disclosure.

It will be understood that, in a case where the processing device is integrated with the storage device, the processing device acquires the image to be detected from itself.

In some embodiments, the position information of the face detection box includes pixel coordinates of four vertices of the face detection box. For example, the position information of the face detection box is {(x1, y1), (x1, y2), (x2, y1), (x2, y2)}, where (x1, y1) is the pixel coordinates of the upper left vertex of the face detection box in the image to be detected, (x1, y2) is the pixel coordinate of the lower left vertex of the face detection box in the image to be detected, (x2, y1) is the pixel coordinates of the upper right vertex of the face detection box in the image to be detected, and (x2, y2) is the pixel coordinates of the lower right vertex of the face detection box in the image to be detected.

In some embodiments, before face detection is performed on the image to be detected, a first image preprocessing operation is performed on the image to be detected, so as to improve the accuracy of face detection.

Optionally, the first image preprocessing includes resizing. For example, the image to be detected is resized to a preset size, so that the input of the face detection model is an image with the preset size, so as to improve the accuracy of face detection. In a specific example, the preset size is 1920*1080.

Optionally, the first image preprocessing includes at least one of brightness variation, sharpening, or denoising, so as to improve the definition of the image to be detected.

Optionally, the first image preprocessing includes normalization processing, causing the gradient of the face detection model to converge when performing face detection, so that the speed and accuracy of face detection are improved. For example, the image to be detected is normalized based on Formula (1) or Formula (2) in the following.

$$Output = \frac{Input - mean}{std} \qquad \text{Formula (1)}$$

Input is used to represent a pixel value of a single pixel of the image to be detected, mean is used to represent an average value of pixel values of all the pixels in the image to be detected, std is used to represent a standard deviation of the pixel values of all the pixels in the image to be detected, Output is used to represent a value obtained after normalizing is performed on the pixel value of the single pixel.

$$Output = \frac{Input - min}{max - min} \qquad \text{Formula (2)}$$

Input is used to represent the pixel value of a single pixel of the image to be detected, min is used to represent the minimum value of the pixel values of all the pixels in the image to be detected, max is used to represent the maximum value of the pixel values of all the pixels in the image to be detected, and Output is used to represent the value obtained after normalizing is performed on the pixel value of the single pixel.

The following will be illustrated by taking an example in which the image to be detected is an RGB image. In a case where the image to be detected is an RGB image, the pixel value Input of a single pixel of the image to be detected is expressed as Input = [ri, gi, bi], where ri is a value of R channel of the pixel, and gi is a value of G channel of the pixel value, bi is a value of B channel of the pixel. In the RGB image, the values of the R channel, G channel, and B channel are all in a range of [0, 255], so that the value of each channel of the pixel value of a single pixel corresponding to Input may be a range of [0, 255].

It will be noted that in a case where some data processing software (e.g. MATLAB) is used for normalization processing, in order to facilitate calculation, the value of the pixel value Input of a single pixel is mapped from [0,255] to [0, 1] (e.g., multiplying the pixel value of a single pixel by 1/255), and then the substitute the mapped Input into the above Formula (1) or Formula (2) for normalization. It can be understood that after the pixel values of all the pixels in the image to be detected are mapped proportionally, the range of the average value mean and the range of the standard deviation std calculated based on the pixel values of all the pixels are also reduced to 1/255 of the respective values before mapping, so that the normalization results of Formula (1) and Formula (2) are not affected, and the present disclosure does not limit thereto.

In some embodiments, step S101 is specifically implemented as: inputting the image to be detected into a pre-trained face detection model to obtain position information of one or more face detection boxes. For example, the image to be detected is input into the pre-trained face detection model, and in a case where a face is detected in the image to be detected, position information of one or more face detection boxes is output.

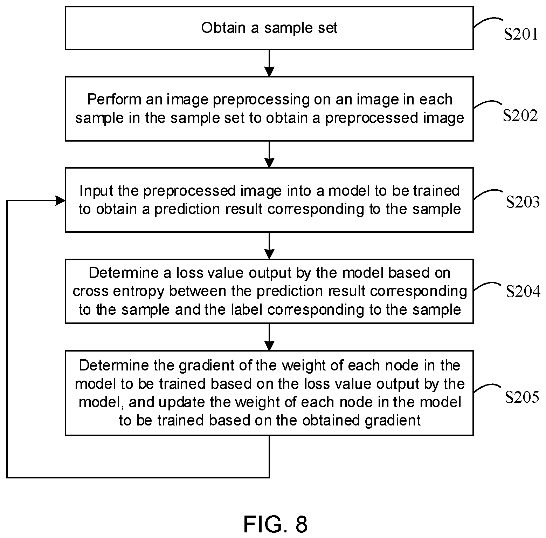

The face detection model is a model trained based on deep learning or machine learning. In some examples, the face detection model is a model trained based on the RetinaFace network or the InsightFace network. It will be understood that the network used for deep learning or machine learning is not specifically limited in the embodiments of the present disclosure. As an example, for the training method of the face detection model, reference will be made to the embodiment shown in FIG. 8 below, which will not be repeated here.

In S102, based on the position information of the one or more face detection boxes, a target face detection box located in the preset seat region is recognized from the one or more face detection boxes.

In some embodiments, the preset seat region includes at least one of the following regions: a driver's seat region, a passenger seat region, or a rear seat region of a vehicle. It will be understood that the preset seat region here is an example of a vehicle driving scene. In different application scenarios, different contents are included. For example, in the cable car application scene, the preset seat region is the seat region in the cable car. It will be understood that the specific content of the preset seat region is not limited in the embodiments of the present disclosure.

In some embodiments, the position information of the preset seat region is preset by the processing device. For example, the position information of the preset seat region is the pixel coordinates of the preset seat region in the image to be detected.

In some embodiments, the size information of the preset seat region is preset by the processing device, and is the size information of a preset seat region image corresponding to the preset seat region. For example, the size information of the preset seat region image may be preset as 640*640.

In some examples, as shown in FIG. 4, the step S102 can be implemented as following steps S1021 and S1022.

In S1021, for each face detection box in the one or more face detection boxes, an overlap degree between the face detection box and the preset seat region is determined based on the position information of the face detection box and the position information of the preset seat region.

In some examples, the overlap degree between the face detection box and the preset seat region is an area of the overlapping region between the face detection box and the preset seat region.

Correspondingly, the step S1021 is specifically implemented as: for each face detection box in one or more face detection boxes, determining position information of the overlapping region between the face detection box and the preset seat region based on the position information of the face detection box and the position information of the preset seat region; determining the number of pixels of an overlapping region image based on the position information of the overlapping region; determining the number of pixels of the overlapping region image as the area of the overlapping region; and determining the area of the overlapping region as the overlap degree between the face detection box and the preset seat region.

In some examples, the overlap degree between the face detection box and the preset seat region is a ratio of an area of the overlapping region between the face detection box and the preset seat region to an area of the preset seat region.

Correspondingly, the step S1021 is specifically implemented as: for each face detection box in one or more face detection boxes, determining position information of the overlapping region between the face detection box and the preset seat region based on the position information of the face detection box and the position information of the preset seat region; determining the number of pixels of the overlapping region image based on the position information of the overlapping region; determining the number of pixels of the image of the overlapping region as the area of the overlapping region; determining the number of pixels of an image of the preset seat region based on the position information of the preset seat region; determining the number of pixels of the preset seat region image as the area of the preset seat region; determining the ratio of the area of the overlapping region between the face detection box and the preset seat region to the area of the preset seat region; and determining the ratio of the area of the overlapping region between the face detection box and the preset seat region to the area of the preset seat region as the overlap degree between the face detection box and the preset seat region.

In some examples, the overlap degree between the face detection box and the preset seat region is a ratio of an area of the overlapping region between the face detection box and the preset seat region to an area of the face detection box.

Correspondingly, the step S1021 is specifically implemented as: for each face detection box in one or more face detection boxes, determining position information of the overlapping region between the face detection box and the preset seat region based on the position information of the face detection box and the position information of the preset seat region; determining the number of pixels of an image of the overlapping region based on the position information of the overlapping region; determining the number of pixels of the image of the overlapping region as the area of the overlapping region; determining the number of pixels of an image of the face detection box based on the position information of the face detection box; determining the number of pixels of the image of the face detection box as the area of the face detection box; determining the ratio of the area of the overlapping region between the face detection box and the preset seat region to the area of the face detection box; and determining the ratio of the area of the overlapping region between the face detection box and the preset seat region to the area of the face detection box as the overlap degree between the face detection box and the preset seat region.

In some examples, the overlap degree between the face detection box and the preset seat region is intersection over union between the face detection box and the preset seat region. The intersection over union is also referred to be as a contact ratio. If it is assumed that the overlapping region between the face detection box and the preset seat region is a first region, and an union region between the face detection box and the preset seat region is a second region, the intersection over union between the face detection box and the preset seat region is a ratio of an area of the first region to an area of the second region.

Correspondingly, the step S1021 is specifically implemented as: for each face detection box in the one or more face detection boxes, determining position information of the first region and position information of the second region based on the position information of the face detection box and the position information of the preset seat region; determining the number of pixels of an image corresponding to the first region based on the position information of the first region, and determining the number of pixels of the image corresponding to the first region as the area of the first region; determining the number of pixels of an image corresponding to the second region based on the position information of the second region, and determining the number of pixels of the image corresponding to the second region as the area of the second region; determining the intersection over union between the face detection box and the preset seat region based on the area of the first region and the area of the second region; and determining the intersection over union between the face detection box and the preset seat region as the overlap degree between the face detection box and the preset seat region.

In S1022, in a case where the overlap degree between the face detection box and the preset seat region is greater than a first overlap degree threshold, the face detection box is determined as the target face detection box.

It will be understood that, in a case where the overlap degree between the face detection box and the preset seat region is greater than the first overlap degree threshold, it can be considered that the person corresponding to the face detection box is located in the preset seat region, so that the face detection box is determined as the target face detection box, which facilitates other processing (e.g., detecting wearing of seat belt) in subsequent. In this way, in a case where the detected face detection box is located in the preset seat region, the detection of wearing of seat belt is performed on the person corresponding to the face detection box. Based on this, the calculation amount in the subsequent detection process is reduced.

In S103, based on the position information of the target face detection box, the image to be detected is cropped to obtain a target human body image corresponding to the target face detection box.

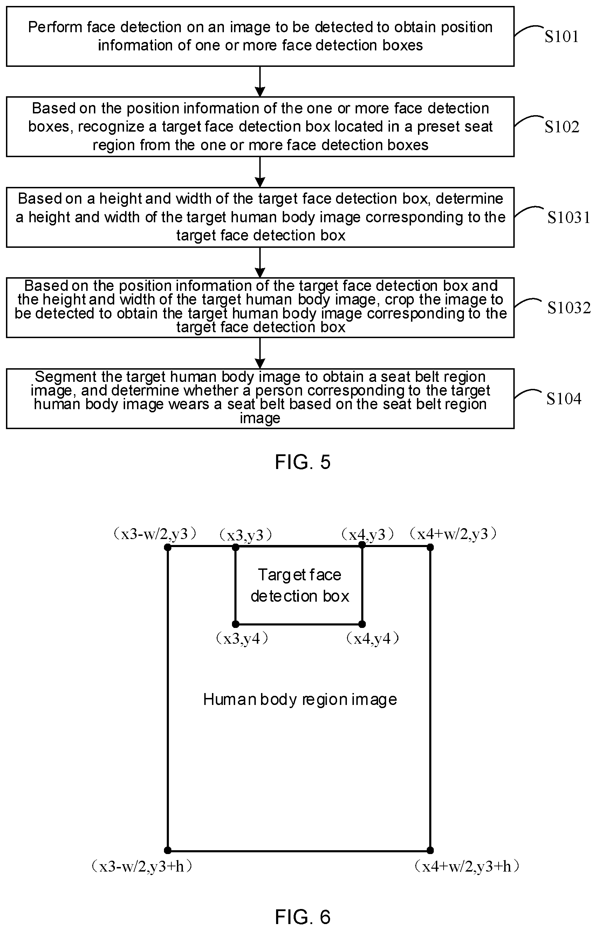

In some embodiments, as shown in FIG. 5, the step S103 can be implemented as following steps S1031 and S1032.

In S1031, based on a height and width of the target face detection box, a height and width of the target human body image corresponding to the target face detection box is determined.

A ratio of the height of the target human body image to the height of the target face detection box is a preset first ratio, and a ratio of the width of the target face detection box to the width of the target human body image is a preset second ratio.

In a specific example, the first ratio is 1.5, and the second ratio is 2. In another specific example, the first ratio is 2.5, and the second ratio is 2. It will be understood that the first ratio and the second ratio here are only examples, and the specific values thereof are not limited in the present disclosure.

In S1032, based on the position information of the target face detection box and the height and width of the target human body image, the image to be detected is cropped to obtain the target human body image corresponding to the target face detection box.

For example, as shown in FIG. 6, if the position information of the target face detection box is {(x3, y3), (x4, y3), (x3, y4), (x4, y4)}, the height of the target human body image is h, and the width of the target human body image is w, then the position information of the target human body image is {(x3-w/2, y3), (x3-w/2, y3+h), (x4+w/2, y3), (x4+w/2, y3+h)}. Furthermore, based on the position information of the target human body image, the image to be detected is segmented to obtain the target human body image corresponding to the target face detection box.

(x3, y3) is the pixel coordinates of the upper left vertex of the target face detection box in the image to be detected, (x4, y3) is the pixel coordinates of the lower left vertex of the target face detection box in the image to be detected, (x3, y4) is the pixel coordinates of the upper right vertex of the target face detection box in the image to be detected, and (x4, y4) is the pixel coordinates of the lower right vertex of the target face detection box in the image to be detected.

It will be understood that the method for determining the position information of the target human body image shown in FIG. 6 is only an example, as long as the target human face detection box is substantially located at the upper middle of the target human body image, and the present disclosure does not specifically limit thereto.

In S104, the target human body image is segmented to obtain a seat belt region image, and whether the person corresponding to the target human body image wears a seat belt is determined based on the seat belt region image.

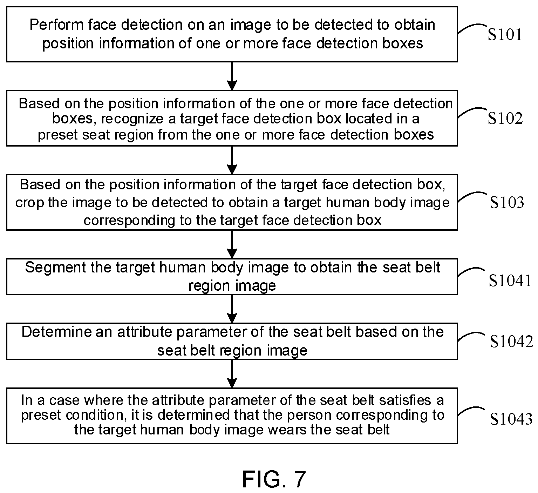

In some embodiments, as shown in FIG. 7, the step S104 can be implemented as following steps S1041 to S1043.

In S1041, the target human body image is segmented to obtain the seat belt region image.

In some examples, the above step S1041 is specifically implemented as: inputting the target human body image into the seat belt wearing detection model to obtain the semantic information of each pixel in the target human body image, and the semantic information is used to indicate the object type corresponding to the pixel; and segmenting the target human body image to obtain the seat belt region image based on the semantic information of each pixel.

As an example, the type of the object indicated by the semantic information includes a seat belt.

As an example, considering that during performing the actual segmentation to obtain the seat belt region image, if in the process of performing the segmentation to obtain the seat belt region image, the human body in the target human body image is marked, it is possible to improve the accuracy of the seat belt segmentation to a certain extent. Therefore, the type of the object indicated by the semantic information also includes a human body.

As an example, the training method of the seat belt wearing detection model still refers to the embodiments shown in FIG. 8 below, which will not be repeated here.

In S1042, an attribute parameter of the seat belt is determined based on the seat belt region image.

In some embodiments, the attribute parameter of the seat belt includes one or more of the following: the slope of the seat belt, which is used to indicate the inclination of the straight line obtained after the fitting process is performed on the seat belt region image with respect to the bottom edge of the target human image; an area of the seat belt region image; an overlap degree between the seat belt region image and the target human body image; and an overlap degree between the seat belt region image and a human body region image that is obtained from segmenting the target human body image.

In some exemplary implementations, the slope of the seat belt is determined in the following manner: performing straight line fitting on the seat belt region image based on Hough transform; and determining the inclination of the straight line obtained after the fitting is performed on the seat belt region image with respect to the bottom edge of the target human image, i.e., the slope of the seat belt. Optionally, before the Hough transform is performed on the seat belt region image, at least one erosion and/or dilation operation is performed on the seat belt region image to remove redundant detail information in the seat belt region image, so that the seat belt region image form a more coherent connected domain to improve the accuracy of the straight line fitting performed in subsequent. It will be understood that the slope of the seat belt is also replaced by the angle between the straight line obtained after the fitting is performed on the seat belt region image and the bottom edge of the target human body image.

In some exemplary embodiments, the area of the seat belt region image is determined in the following manner: determining the number of pixels of the seat belt region image based on the seat belt region image; and determining the number of the pixels of the seat belt region image as the area of the seat belt region image.

In some exemplary implementations, the overlap degree of the seat belt region image and the target human body image is any one of the following: the area of the seat belt region image, or a ratio of the area of the seat belt region image to the area of the target human body image. It will be understood that the area of the seat belt region image is the number of the pixels of the seat belt region image, and the area of the target human body image is the number of the pixels of the target human body image.

In some exemplary implementations, the overlap degree between the seat belt region image and the human body region image is any of the following: an area of the overlapping area between the seat belt region image and the human body region image; a ratio of the area of the overlapping area between the seat belt region image and the human body region image to the area of the human body region image; a ratio of the area of the overlapping area between the seat belt region image and the human body region image to the area of the seat belt region image; or intersection over union between the seat belt region image and the human body region image. It will be understood that, for the convenience of calculation, the area of the image is represented by the number of pixels in the image; for example, the number of pixels in the human body region image is used as the area of the image of the human body region.

The human body region image is obtained in the following manner: inputting the target human body image into the seat belt wearing detection model to obtain the segmented human body region image and seat belt region image; alternatively, detecting the human body contour edge in the target human body image to determine the pixel position of the human body contour edge, and segmenting the target human body image to obtain the human body region image based on the pixel position of the human body contour edge. It will be understood that the method for segmenting the human body region image is not limited in the present disclosure.

In S1043, in a case where the attribute parameter of the seat belt satisfies a preset condition, it is determined that the person corresponding to the target human body image wears the seat belt.

In some embodiments, the preset condition includes a first preset condition, and the first preset condition includes that the slope of the seat belt is within a preset range.

In some embodiments, the preset condition includes a second preset condition, and the second preset condition includes at least one of the following: the area of the seat belt region image exceeding a preset area threshold; the overlap degree between the seat belt region image and the target human body image being greater than or equal to a second overlap degree threshold; or the overlap degree between the seat belt region image and the human body region image being greater than or equal to a third overlap degree threshold.

It will be understood that, in a case where the person wears the seat belt correctly, the seat belt is held diagonally across the chest of the person. Therefore, the area of the seat belt in the target human body image should be large, and the seat belt has a certain angle. Thus, based on the combination of various sub-conditions in the above preset conditions (e.g., the first preset condition and/or the second preset condition), it is accurately determined whether the person wears seat belt.

In a specific example, in a case where the attribute parameter of the seat belt satisfies the first preset condition, it is determined that the person corresponding to the target human body image wears the seat belt. For example, in a case where the slope of the seat belt is within the preset range, it is determined that the person corresponding to the target human body image wears seat belt.

In another specific example, in a case where the attribute parameter of the seat belt satisfies the second preset condition, it is determined that the person corresponding to the target human body image wears seat belt. For example, assuming that the second preset condition is that the area of the seat belt region image exceeds a preset area threshold, in the case where the area of the seat belt region image exceeds the preset area threshold, it is determined that the person corresponding to the target human body image wears seat belt.

In yet another specific example, in a case where the attribute parameter of the seat belt satisfies both the first preset condition and the second preset condition, it is determined that the person corresponding to the target human body image wears seat belt.

For example, assuming that the second preset condition is that the area of the seat belt region image exceeds the preset area threshold, in a case where the slope of the seat belt is within the preset range and the area of the seat belt region image exceeds the preset area threshold, it is determined that the person corresponding to the target human body image wears seat belt.

For another example, assuming that the second preset condition includes that the area of the seat belt region image exceeds a preset area threshold and the overlap degree between the seat belt region image and the target human body image is greater than or equal to the second overlap degree threshold, in a case where the slope of the seat belt is within the preset range, the area of the seat belt region image exceeds the preset area threshold, and the overlap degree between the seat belt region image and the target human body image is greater than or equal to the second overlap degree threshold, it is determined that the person corresponding to the target human body image wears seat belt.

Further, in order to reduce the computation load in the detection process, it is not necessary to determine all the conditions in the preset conditions one by one. For example, assuming that the attribute parameter of the seat belt satisfies both the first preset condition and the second preset condition, it is determined that the person corresponding to the target human body image wears seat belt, it is possible to first determine the attribute parameter of the seat belt satisfies the first preset condition, if no, it is directly determined that the person corresponding to the target human body image does not wear the seat belt, and it is no longer determined whether the attribute parameter of the seat belt satisfies the second preset condition.

As a specific example, the step S1043 is implemented as: determining whether the attribute parameter of the seat belt satisfies the first preset condition; in a case where the attribute parameter of the seat belt does not satisfy the first preset condition, it is determined that the person does not wear the seat belt; in a case where the attribute parameter of the seat belt satisfies the first preset condition, it is determined whether the attribute parameter of the seat belt satisfies the second preset condition; in a case where the attribute parameter of the seat belt does not satisfy the second preset condition, it is determined that the person does not wear the seat belt; in a case where the attribute parameter of the seat belt satisfies the second preset condition, it is determined that the person wears seat belt.

Based on this, the calculation amount in the detection process of the seat belt is reduced. Similarly, it is also possible to first determine whether the attribute parameter of the seat belt satisfies the second preset condition, if no, it is directly determined that the person corresponding to the target human body image does not wear the seat belt, and it is no longer determined whether the attribute parameter of the seat belt satisfies the second preset condition, and it will be understood that the present disclosure does not specifically limit thereto.

The solution provided by the embodiments of the present disclosure does not rely on the sensor in the seat, which reduces the detection errors due to active human circumvention of detection (e.g., purchasing a separate latch plate and inserting the latch plate into the buckle), so that the accuracy of seat belt wearing detection is improved. As a result, the driving safety is improved. In addition, in a case where the person in the vehicle is located in the preset seat region, whether the person wears the seat belt is detected, which reduces the calculation amount of detection and improves the efficiency of seat belt wearing detection. Moreover, since the seat belt wearing detection is performed on the person in the image to be detected and located in the preset seat region, it is possible to prevent from obtaining an erroneous detection result due to that erroneously detecting the wearing of the seat belt on a person outside the preset seat region in a case where there is a person outside the preset seat region (e.g., a pedestrian outside the window of a vehicle) in the image to be detected.

In some embodiments, the embodiments of the present disclosure provide a model training method, which is applicable to the face detection model and/or seat belt wearing detection model mentioned above. As shown in FIG. 8, the model training method includes the following steps S201 to S205.

In S201, a sample set is obtained.

The sample set includes a plurality of samples, each sample corresponds to a frame of image and a label corresponding to the image, and the image is in one-to-one correspondence with the label.

As an example, the content displayed in the image in the sample includes at least one of the following: a cockpit, a driver, a driver's seat, a passenger, and a seat belt. It will be understood that the content here is only an example, and is changed based on changes in actual requirements (for example, in a case where a face detection model is trained, the content displayed in the image in the sample should include a human face), which is not specifically limited in the present disclosure.

As an example, when training a face detection model, the label corresponding to the image is used to mark the position information of the face detection box in the image.

As an example, when training a seat belt wearing detection model, the label corresponding to the image is used to mark the semantic information of each pixel in the image, and the semantic information is used to indicate the type of the object corresponding to the pixel. Optionally, in a case where it is necessary to obtain, by mans of image segmentation, the image of the seat belt region based on the seat belt wearing detection model, the type of the object indicated by the semantic information includes a seat belt. Further, in order to improve the accuracy of the image segmentation of the seat belt area, the type of the object indicated by the semantic information further includes human body. Optionally, in a case where it is necessary to segment the human body region image based on the seat belt wearing detection model, the type of the object indicated by the semantic information includes a human body.

In S202, an image preprocessing is performed on an image in each sample in the sample set to obtain a preprocessed image.

In some examples, the image preprocessing includes a first image preprocessing and/or a second image preprocessing.

The second image preprocessing includes at least one of the following: random cropping, left-right flipping, cutmix, or color jetter. Optionally, it is possible to improve the generalization of the face detection model in a case of different sizes of pictures based on the processing of random cropping. Optionally, it is possible to improve the generalization of the face detection model in a case where the person wearing the seat belt in the image is located in the seat region in different directions based on the processing of left-right flipping. Optionally, it is possible to improve the generalization of images in different mosaic situations based on the processing of cutmix. Optionally, it is possible to improve the generalization of images in different colors based on the processing of color jetter, such as random adjustment of brightness, saturation, or contrast.

For the first image preprocessing, reference is made to the above description, which will not be repeated here.

In S203, the preprocessed image is input into a model to be trained to obtain a prediction result corresponding to the sample.

Optionally, the size of the preprocessed image is a preset size.

Optionally, when training the face detection model, the prediction result corresponding to the sample is the position information of a predicted face detection box.

Optionally, when training the seat belt wearing detection model, the prediction result corresponding to the sample includes predicted semantic information of each pixel.

Optionally, when training the face detection model, the model to be trained is established based on the RetinaFace network; when training the seat belt wearing detection model, the model to be trained is established based on the Deeplabv3+ network. It will be understood that the network used in the training process of the model (e.g., face detection model and/or seat belt wearing detection model) is not specifically limited in present disclosure.

It will be understood that the above step S202 is optional. In a case where the step S202 is not performed, the step S203 is implemented as: inputting the image in the sample to the model to be trained to obtain the prediction result corresponding to the sample.

In S204, a loss value output by the model is determined based on cross entropy between the prediction result corresponding to the sample and the label corresponding to the sample.

In some examples, the cross entropy between the prediction result corresponding to the sample and the label corresponding to the sample satisfies the following Formula (3).

$$\text{loss} = \text{label} \cdot \log\frac{1}{1+e^{-x}} + (1 - \text{label}) \cdot \log\left(1 - \frac{1}{1+e^{-x}}\right) \qquad \text{Formula (3)}$$

loss is used to represent the cross entropy between the prediction result corresponding to the sample and the label corresponding to the sample, label is used to represent the label corresponding to the sample, and x is used to represent the prediction result corresponding to the sample.

In S205, the gradient of the weight of each node in the model to be trained is determined based on the loss value output by the model, and the weight of each node in the model to be trained is updated based on the obtained gradient.

In this way, the above step S203 to step S205 are repeated until the preset training termination condition is satisfied, and a trained model is obtained.

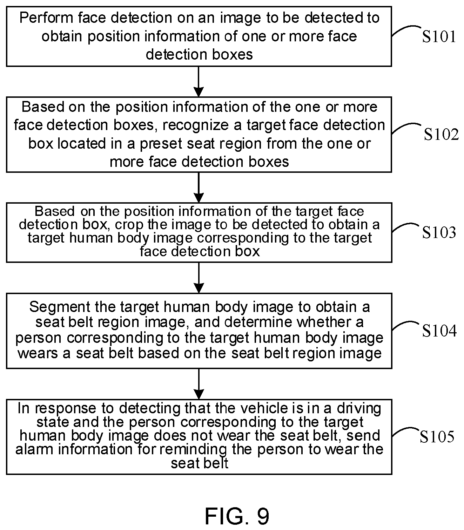

In some embodiments, in a case where it is detected that the person corresponding to the target human body image does not wear the seat belt, it is also possible to perform an alarm operation. For example, as shown in FIG. 9, after the step S104, the method further includes step S105.

In S105, in response to detecting that the vehicle is in a driving state and the person corresponding to the target human body image does not wear the seat belt, alarm information for reminding the person to wear the seat belt is send out.

In some embodiments, in response to detecting that the vehicle is in a driving state and the person corresponding to the target human body image does not wear a seat belt, the alarm information is prompted in the form of text, animation, strobe, voice, buzzer, or vibration.

In some embodiments, the processing device and the alarm device are independently arranged and connected, and the step S105 is specifically implemented as: in response to detecting that the vehicle is in a driving state and the person corresponding to the target human body image does not wear the seat belt, an alarm information for reminding the person to wear the seat belt is send out by the processing device through the alarm device.

In some embodiments, the processing device is integrated with the alarm device, and the step S105 is specifically implemented as: in response to detecting that the vehicle is in a driving state and the person corresponding to the target human body image does not wear the seat belt, an alarm information for reminding the person to wear the seat belt is send out.

In some embodiments, after the seat belt wearing detection function is turned on, the processing device acquires the image to be detected and executes the seat belt wearing detection method shown in the embodiments of the present disclosure.

Optionally, the processing device confirms that the seat belt wearing detection function is turned on.

Optionally, in response to receiving an instruction to turn on the seat belt wearing detection function, the processing device turns on the seat belt wearing detection function.

For ease of understanding, a specific example will be shown below.

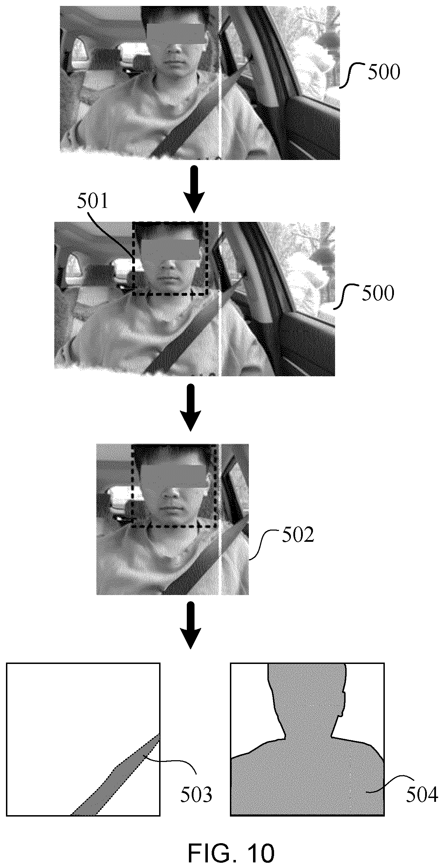

Referring to FIG. 10, after acquiring an image to be detected 500, the processing device performs face detection on the image to be detected 500 to obtain position information of a face detection box 501 in the image to be detected 500.

After it is determined that the face detection box 501 is located in the preset seat region based on the position information of the face detection box 501, the face detection box 501 is determined as a target face detection box.

Based on the position information of the target face detection box (i.e., the face detection box 501), the image to be detected 500 is cropped to obtain a target human body image 502 corresponding to the target face detection box 500 according to a first ratio of 2 and a second ratio of 2.5, so that a height of the target human body image 502 is twice a height of the face detection box 501, and a width of the target human body image 502 is 2.5 times a width of the face detection box 501.

The target human body image 502 is segmented to obtain a seat belt region image 503 and a human body region image 504.

A straight-line fitting is performed on the seat belt region image 503 by Hough transform to obtain the slope of the seat belt.

An overlap degree between the seat belt region image 503 and the human body region image 504 is calculated.

In a case where the slope of the seat belt is within a preset range, and the overlap degree between the seat belt region image 503 and the human body region image 504 is greater than or equal to a third overlap degree threshold, it is determined that the person corresponding to the target human body image does not wear the seat belt.

Further, in a case where it is detected that the person corresponding to the target human body image does not wear the seat belt and the vehicle is in a driving state, alarm information for reminding the person to wear the seat belt is sent.

It will be seen that the foregoing descriptions mainly introduce the solutions provided by the embodiments of the present disclosure from perspective of the method. In order to achieve the above functions, embodiments of the present disclosure provide corresponding hardware structures and/or software modules for performing various functions. A person skilled in the art will be easy to realize that, by combining modules and algorithm steps of the embodiments described in the embodiments disclosed herein, the embodiments of the present disclosure is implemented through hardware or a combination of hardware and computer software. Whether a certain function is performed by the hardware or a way of driving hardware by the computer software depends on a specific application and a design constraint of a technical scheme. A skilled person uses different methods for each specific application to implement the described functions, but such implementation should not be considered beyond the scope of the present disclosure.

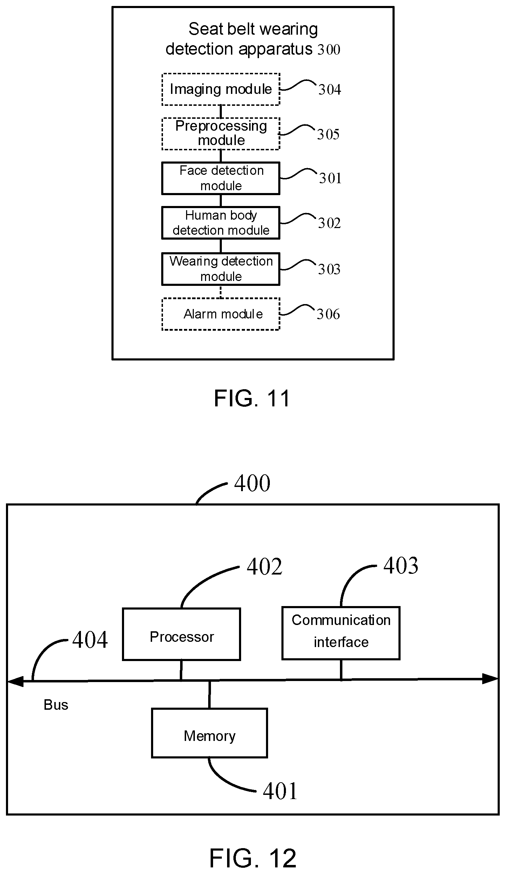

As shown in FIG. 11, embodiments of the present application provide a seat belt wearing detection apparatus, which is used to implement the above seat belt wearing detection method and any possible implementation thereof. The seat belt wearing detection apparatus 300 includes a face detection module 301, a human body detection module 302, and a wearing detection module 303. The face detection module 301 is used to: perform face detection on the image to be detected to obtain the position information of one or more face detection boxes; recognize the target face detection box within the preset seat region based on the position information of one or more face detection boxes. The human body detection module 302 is used to crop the image to be detected to obtain the target human body image corresponding to the target face detection box based on the position information of the target face detection box. The wearing detection module 303 is used to segment the target human body image to obtain the seat belt region image, and determine whether the person corresponding to the target human body image wears a seat belt based on the seat belt region image.

In some embodiments, the above-mentioned face detection module 301 is specifically used to: determine, for each face detection box in the one or more face detection boxes, an overlap degree between the face detection box and the preset seat region based on the position information of the face detection box and the position information of the preset seat region; determine the face detection box as the target face detection box in a case where the overlap degree between the face detection box and the preset seat region is greater than or equal to a first overlap degree threshold.

In some embodiments, the wearing detection module 303 is specifically used to: determine the attribute parameter of the seat belt based on the seat belt region image, the attribute parameter of the seat belt including the slope of the seat belt used to indicate the inclination of the straight line obtained after the fitting is performed on the seat belt region image with respect to the bottom edge of the target human image; determine the person corresponding to the target human body image wears the seat belt in a case where the attribute parameter of the seat belt satisfies the preset condition, the preset condition including a first preset condition, and the first preset condition including that the slope of the seat belt is within the preset range.

In some embodiments, the wearing detection module 303 is further used to segment the target human body image to obtain the human body region image. The attribute parameter of the seat belt further includes at least one of the following: an area of the seat belt region image, an overlap degree between the seat belt region image and target human body image, and an overlap degree between the seat belt region image and the human body area image.

In some embodiments, the preset condition further includes a second preset condition, and the second preset condition includes at least one of the following: the area of the seat belt region image exceeding a preset area threshold; the overlap degree between the seat belt region image and the target human body image being greater than or equal to a second overlap degree threshold; or the overlap degree between the seat belt region image and the human body region image being greater than or equal to a third overlap degree threshold.

In some embodiments, the wearing detection module 303 is specifically used to: determine whether the attribute parameter of the seat belt satisfies the first preset condition; determine, in a case where the attribute parameter of the seat belt does not satisfy the first preset condition, that the person corresponding to the target human body image does not wear seat belt; determine, in a case where the attribute parameter of the seat belt satisfies the first preset condition, whether the attribute parameter of the seat belt satisfies the second preset condition; determine, in a case where the attribute parameter of the seat belt does not satisfy the second preset condition, that the person corresponding to the target human body image does not wear seat belt; determine, in a case where the attribute parameter of the seat belt satisfies the second preset condition, that the person corresponding to the target human body image wears seat belt.

In some embodiments, the human body detection module 302 is specifically used to: determine a height and width of the target human body image corresponding to the target human face detection box based on the height and width of the target human face detection box, a ratio of the height of the target human body image to the height of the target face detection box is a preset first ratio, a ratio of the width of the target face detection box to the width of the target human body image is a preset second ratio; crop the image to be detected to obtain the target human body image corresponding to the target face detection box based on the position information of the target face detection box and the height and width of the human body region image.

In some embodiments, the above apparatus further includes an imaging module 304 and a preprocessing module 305. The imaging module 304 is used to acquire an original image; the imaging module 304 is disposed inside the vehicle and the capturing region of the imaging module 304 includes a preset seat region. The preprocessing module 305 is used to perform affine transformation on the original image to obtain the image to be detected; the preset seat region is located in the middle of the image to be detected.

In some embodiments, the imaging module 304 is arranged at least one of the following positions: the A-pillar of the cockpit, the instrument panel, the reading light, the center control display or the central console.

In some embodiments, the wearing detection module 303 is specifically used to: input the target human body image into the seat belt wearing detection model to obtain the semantic information of each pixel in the target human body image, the semantic information being used to indicate the type of the object corresponding to the pixel; and segment the target human body image to obtain the seat belt region image based on the semantic information of each pixel.

In some embodiments, the face detection module 301 is specifically used to input the image to be detected into the face detection model to obtain the position information of one or more face detection boxes.

In some embodiments, the seat belt wearing detection apparatus further includes an alarm module 306, and the alarm module 306 is used to send, in a case where it is detected that the person corresponding to the target human body image does not wear the seat belt and the vehicle is in a driving state, an alarm information for reminding the person to wear the seat belt.

It will be noted that, the division of the modules in FIG. 11 is schematic, and is only a logical function division, and there are other ways to divide the modules in actual implementation. For example, two or more functions are integrated into one processing module. The integrated modules are implemented in the form of hardware or software functional modules.

In addition, embodiments of the present disclosure provide an electronic device involved in the foregoing embodiments. As shown in FIG. 12, the electronic device 400 includes a processor 402 and a bus 404. Optionally, the electronic device further includes a memory 401; optionally, the electronic device further includes a communication interface 403.

The processor 402 implements or executes various illustrative logical blocks, modules and circuits described in content of the present disclosure. The processor 402 is a central processor or any other general-purpose processor, a digital signal processor, an application specific integrated circuit, a field programmable gate array, or any other programmable logic device, a transistor logic device, a hardware component, or any combination of the above. It can implement or execute various illustrative logical blocks, modules and circuits described in content of the present disclosure. The processor 402 is also a combination that implements computing functions, for example, a combination including one or more microprocessors, a combination of a DSP and a microprocessor, or the like.

The communication interface 403 is used to connect to other devices through the communication network. The communication network may be Ethernet, wireless access network, wireless local area network (WLAN) or the like.

The memory 401 may be, but is not limited to, a read-only memory (ROM) or a static storage device of any other type that can store static information and instructions, a random access memory (RAM), or a dynamic storage device of any other type that can store information and instructions, or an electrically erasable programmable read-only memory (EEPROM), a magnetic disk storage medium or any other magnetic disk storage device, or any other medium that can be used to carry or store desired program codes with instructions or data and can be accessed by a computer.

As a possible implementation, the memory 401 may exist independently of the processor 402, and the memory 401 may be connected to the processor 402 through the bus 404, and is used for storing instructions or program codes. When calling and executing the instructions or program codes stored in the memory 401, the processor 402 may implement the seat belt wearing detection method provided in the embodiments of the present disclosure.

In another possible implementation, the memory 401 may be integrated with the processor 402.

The bus 404 may be an extended industry standard architecture (EISA) bus or the like. The bus 404 may be divided into address bus, data bus, control bus and so on. For ease of representation, only one bold line is used in FIG. 12, but it does not mean that there is only one bus or one type of bus.

From description of the above embodiments, those skilled in the art will clearly understand that, for convenience and brevity of description, an example is only given according to the above division of functional modules. In practical applications, the above functions are allocated to different functional modules as needed. That is, an internal structure of the device is divided into different functional modules to perform all or part of the functions described above.

Some embodiments of the present disclosure provide a computer-readable storage medium (for example, a non-transitory computer-readable storage medium), the computer-readable storage medium has stored a computer program instruction, and the computer program instruction, when executed on a computer (for example, an electronic device or a seat belt wearing detection apparatus), causes the computer to perform the seat belt wearing detection method as described in any of the above embodiments.

For example, the computer-readable storage medium may include, but is not limited to, a magnetic storage device (e.g., a hard disk, a floppy disk or a magnetic tape), an optical disk ((e.g., a compact disk (CD), a digital versatile disk (DVD)), a smart card and a flash memory device (e.g., an erasable programmable read-only memory (EPROM), a card, a stick or a key driver). The various computer-readable storage media described in present disclosure may represent one or more devices and/or other machine-readable storage media for storing information. The term "machine-readable storage media" may include, but are not limited to, wireless channels and various other media capable of storing, containing, and/or carrying instruction(s) and/or data.

Some embodiments of the present disclosure provide a computer program product, which is stored on, for example, a non-transitory computer-readable storage medium. The computer program product includes a computer program instruction, and when the computer program instructions are executed on a computer (for example, an electronic device or a seat belt wearing detection apparatus), the computer program instructions cause the computer to perform the seat belt wearing detection method according to the foregoing embodiments.

Some embodiments of the present disclosure provide a computer program. When the computer program is executed on a computer (for example, an electronic device or a seat belt wearing detection apparatus), the computer program causes the computer to perform the seat belt wearing detection method according to the foregoing embodiments.

Beneficial effects of the non-transitory computer-readable storage medium, computer program product and computer program described above are the same as the beneficial effects of the seat belt wearing detection method described in some of the above embodiments, which will not be repeated here.

Although the present disclosure has been described in conjunction with various embodiments herein, other variations of the disclosed embodiments may be understood and realized by a person skilled in the art by reviewing the accompanying drawings, the disclosure, and the appended claims during the implementation of the present disclosure for which protection is claimed. In the claims, the terms "comprising" does not exclude other components or steps, and "a" or "an" does not exclude a case of multiple. A single processor or other unit may achieve the functions of several items recited in the claims. The mere fact that certain solutions are recited in mutually different dependent claims does not indicate that these solutions cannot be combined to good effect.

The above are only specific embodiments of the present disclosure, but the scope of protection of the present disclosure is not limited thereto, and any variations or replacements within the technical scope of the present disclosure shall fall within the protection scope of the present disclosure. Therefore, the protection scope of the present disclosure shall be subject to the protection scope of the claims.

**Claims**

1. A seat belt wearing detection method, comprising:

performing (S101) face detection on an image to be detected to obtain position information of one or more face detection boxes;
recognizing (S102) a target face detection box located in a preset seat region from the one or more face detection boxes based on the position information of the one or more face detection boxes;
cropping (S103) the image to be detected to obtain a target human body image corresponding to the target face detection box based on position information of the target face detection box; and
segmenting (S104) the target human body image to obtain a seat belt region image, and determining whether a person corresponding to the target human body image wears a seat belt based on the seat belt region image; **characterized in that** recognizing (S102) the target face detection box located in the preset seat region from the one or more face detection boxes based on the position information of the one or more face detection boxes, includes:

determining (S1021), for each face detection box in the one or more face detection boxes, an overlap degree between the face detection box and the preset seat region based on position information of the face detection box and position information of the preset seat region; and
determining (S1022) the face detection box as the target face detection box in a case where the overlap degree between the face detection box and the preset seat region is greater than a first overlap degree threshold.

2. The method according to claim 1, wherein determining (S104) whether the person corresponding to the target human body image wears the seat belt based on the seat belt region image, includes:

determining (S1042) an attribute parameter of the seat belt based on the seat belt region image; the attribute parameter of the seat belt including a slope of the seat belt, and the slope of the seat belt being used to indicate an inclination of a straight line obtained after a fitting process is performed on the seat belt region image with respect to a bottom edge of the target human image; and
determining (S1043) the person corresponding to the target human body image wears the seat belt in a case where the attribute parameter of the seat belt satisfies a preset condition; the preset condition including a first preset condition, and the first preset condition including that the slope of the seat belt is within a preset range.

3. The method according to claim 2, wherein the method further comprises: segmenting the target human body image to obtain a human body region image; wherein
the attribute parameter of the seat belt further includes at least one of the following: an area of the seat belt region image, an overlap degree between the seat belt region image and the target human body image, and an overlap degree between the seat belt region image and the human body region image.

4. The method according to claim 3, wherein the preset condition further includes a second preset condition, and the second preset condition includes at least one of the following:

the area of the seat belt region image exceeding a preset area threshold;
the overlap degree between the seat belt region image and the target human body image being greater than or equal to a second overlap degree threshold; or
the overlap degree between the seat belt region image and the human body region image being greater than or equal to a third overlap degree threshold.

5. The method according to claim 4, wherein determining (S1043) the person corresponding to the target human body image wears the seat belt in the case where the attribute parameter of the seat belt satisfies the preset condition, includes:

determining whether the attribute parameter of the seat belt satisfies the first preset condition;

in a case where the attribute parameter of the seat belt does not satisfy the first preset condition, determining that the person corresponding to the target human body image does not wear the seat belt;

in a case where the attribute parameter of the seat belt satisfies the first preset condition, determining whether the attribute parameter of the seat belt satisfies the second preset condition;

in a case where the attribute parameter of the seat belt does not satisfy the second preset condition, determining that the person corresponding to the target human body image does not wear the seat belt; and

in a case where the attribute parameter of the seat belt satisfies the second preset condition, determining that the person corresponding to the target human body image wears the seat belt.

6. The method according to claim 1, wherein cropping (S103) the image to be detected to obtain the target human body image corresponding to the target face detection box based on the position information of the target face detection box, includes:

determining (S1031) a height and width of the target human body image corresponding to the target human face detection box based on a height and width of the target human face detection box; wherein a ratio of the height of the target human body image to the height of the target face detection box is a preset first ratio, and a ratio of the width of the target face detection box to the width of the target human body image is a preset second ratio; and

cropping (S1032) the image to be detected to obtain the target human body image corresponding to the target face detection box based on the position information of the target face detection box and the height and width of the human body region image.

7. The method according to claim 1, wherein the method further comprises:

acquiring an original image captured by an imaging device disposed inside a vehicle and whose capturing region including the preset seat region; and

performing affine transformation on the original image to obtain the image to be detected, wherein the preset seat region is located in the middle of the image to be detected.

8. The method according to any one of claims 1 to 7, wherein segmenting (S1041) the target human body image to obtain the seat belt region image, includes:

inputting the target human body image into a seat belt wearing detection model to obtain semantic information of each pixel in the target human body image, the semantic information being used to indicate a type of an object corresponding to the pixel; and segmenting the target human body image to obtain the seat belt region image based on the semantic information of each pixel; and

performing (S101) face detection on the image to be detected to obtain the position information of the one or more face detection boxes, includes:

inputting image to be detected into a face detection model to obtain the position information of the one or more face detection boxes.

9. An electronic device (400), comprising: a processor (402) and a memory (401) for storing instructions executed by the processor (402); wherein

the processor (402) is configured to execute the instructions to cause the electronic device (400) to perform the method according to any one of claims 1 to 8.

10. The electronic device (400) according to claim 9, wherein the electronic device (400) further comprises an imaging device (101), wherein the imaging device (101) and one of the processor (402) and memory (401) have a data connection therebetween, and the imaging device (101) is used to capture an original image; the imaging device (101) is disposed inside a vehicle, and a capturing region of the imaging device (101) includes a preset seat region;

the processor (402) is further configured to perform affine transformation on the original image to obtain an image to be detected; the preset seat region is located in the middle of the image to be detected.

11. The electronic device (400) according to claim 10, wherein the imaging device (101) is provided at at least one of following locations: A-pillar of a cockpit (201, 202), an instrument panel (203), a reading light, a center control display (204) or a central console (205).

12. A non-transitory computer-readable storage medium, wherein

the non-transitory computer-readable storage medium has stored computer instructions that, when run on an electronic device (400), cause the electronic device (400) to perform the method according to any one of claims 1 to 8.

13. A computer program product, comprising computer program instructions, wherein when executed on a computer, the computer program instructions cause the computer to perform one or more steps in the method according to any one of claims 1 to 8.

14. A computer program, when executed on a computer, causing the computer to perform one or more steps in the method according to any one of claims 1 to 8.

**Patentansprüche**

1. Verfahren zur Erkennung des Tragens eines Sicherheitsgurts, umfassend:

Durchführen (S101) von Gesichtserkennung auf einem zu erkennenden Bild, um Positionsinformationen für ein oder mehrere Gesichtserkennungsfelder zu erhalten;
Erkennen (S102) eines Zielgesichtserkennungsfelds, das in einer voreingestellten Sitzregion von dem einen oder den mehreren Gesichtserkennungsfeldern gelegen ist, basierend auf den Positionsinformationen des einen oder der mehreren Gesichtserkennungsfelder;
Zuschneiden (S103) des zu erkennenden Bildes, um basierend auf Positionsinformationen des Zielgesichtserkennungsfelds ein Zielbild des menschlichen Körpers zu erhalten, das dem Zielgesichtserkennungsfeld entspricht; und
Segmentieren (S104) des Zielbildes des menschlichen Körpers, um ein Bild der Sicherheitsgurtregion zu erhalten, und Bestimmen, basierend auf dem Bild der Sicherheitsgurtregion, ob eine Person, die dem Zielbild des menschlichen Körpers entspricht, einen Sicherheitsgurt trägt;
**dadurch gekennzeichnet ist, dass**
Erkennen (S102) des Zielgesichtserkennungsfelds, das in der voreingestellten Sitzregion gelegen ist, aus dem einen oder den mehreren Gesichtserkennungsfeldern basierend auf den Positionsinformationen des einen oder der mehreren Gesichtserkennungsfelder, Folgendes einschließt:

Bestimmen (S1021), für jedes Gesichtserkennungsfeld in dem einen oder mehreren Gesichtserkennungsfeldern, eines Überlappungsgrads zwischen dem Gesichtserkennungsfeld und der voreingestellten Sitzregion basierend auf Positionsinformationen des Gesichtserkennungsfelds und Positionsinformationen der voreingestellten Sitzregion; und
Bestimmen (S1022) des Gesichtserkennungsfelds als das Zielgesichtserkennungsfeld in einem Fall, in dem der Überlappungsgrad zwischen dem Gesichtserkennungsfeld und der voreingestellten Sitzregion größer ist als ein erster Überlappungsgradschwellenwert.

2. Verfahren nach Anspruch 1, wobei das Bestimmen (S104), basierend auf dem Bild der Sicherheitsgurtregion, ob die Person, die dem Zielbild des menschlichen Körpers entspricht, den Sicherheitsgurt trägt, Folgendes einschließt:

Bestimmen (S1042) eines Attributparameters des Sicherheitsgurts basierend auf dem Bild der Sicherheitsgurtregion; wobei der Attributparameter des Sicherheitsgurts eine Schräge des Sicherheitsgurts einschließt und die Schräge des Sicherheitsgurts dazu verwendet wird, eine Neigung der geraden Linie anzugeben, die nach einem Anpassungsprozess auf dem Bild der Sicherheitsgurtregion in Bezug auf einen unteren Rand des menschlichen Zielbildes durchgeführt wird; und
Bestimmen (S1043), dass die Person, die dem Zielbild des menschlichen Körpers entspricht, den Sicherheitsgurt trägt, in einem Fall, in dem der Attributparameter des Sicherheitsgurts eine voreingestellte Bedingung erfüllt; wobei die voreingestellte Bedingung eine erste voreingestellte Bedingung einschließt und die erste voreingestellte Bedingung einschließt, dass die Schräge des Sicherheitsgurts innerhalb eines voreingestellten Bereichs liegt.

3. Verfahren nach Anspruch 2, wobei das Verfahren weiter Folgendes umfasst: Segmentieren des Zielbildes des menschlichen Körpers, um ein Bild der menschlichen Körperregion zu erhalten; wobei der Attributparameter des Sicherheitsgurts weiter mindestens eines von Folgendem einschließt: eine Fläche des Bildes der Sicherheitsgurtregion, einen Überlappungsgrad zwischen dem Bild der Sicherheitsgurtregion und dem Zielbild des menschlichen Körpers und einen Überlappungsgrad zwischen dem Bild der Sicherheitsgurtregion und dem Bild der menschlichen Körperregion.

4. Verfahren nach Anspruch 3, wobei die voreingestellte Bedingung weiter eine zweite voreingestellte Bedingung einschließt und die zweite voreingestellte Bedingung mindestens eines von Folgendem einschließt:

dass die Fläche des Bildes der Sicherheitsgurtregion über einen voreingestellten Flächenschwellenwert hinausgeht;
dass der Überlappungsgrad zwischen dem Bild der Sicherheitsgurtregion und dem Zielbild des menschlichen Körpers größer oder gleich groß ist wie ein zweiter Überlappungsgradschwellenwert; oder
dass der Überlappungsgrad zwischen dem Bild der Sicherheitsgurtregion und dem Bild der menschlichen Körperregion größer oder gleich groß ist wie ein dritter Überlappungsgradschwellenwert.

5. Verfahren nach Anspruch 4, wobei das Bestimmen (S1043), dass die Person, die dem Zielbild des menschlichen Körpers entspricht, den Sicherheitsgurt trägt, in dem Fall, in dem der Attributparameter des Sicherheitsgurts die voreingestellte Bedingung erfüllt, Folgendes einschließt:

Bestimmen, ob der Attributparameter des Sicherheitsgurts die erste voreingestellte Bedingung erfüllt;
in einem Fall, in dem der Attributparameter des Sicherheitsgurts die erste voreingestellte Bedingung nicht erfüllt, bestimmen, dass die Person, die dem Zielbild des menschlichen Körpers entspricht, den Sicherheitsgurt nicht trägt;
in einem Fall, in dem der Attributparameter des Sicherheitsgurts die erste voreingestellte Bedingung erfüllt, bestimmen, ob der Attributparameter des Sicherheitsgurts die zweite voreingestellte Bedingung erfüllt;
in einem Fall, in dem der Attributparameter des Sicherheitsgurts die zweite voreingestellte Bedingung nicht erfüllt, bestimmen, dass die Person, die dem Zielbild des menschlichen Körpers entspricht, den Sicherheitsgurt nicht trägt; und

in einem Fall, in dem der Attributparameter des Sicherheitsgurts die zweite voreingestellte Bedingung erfüllt, bestimmen, dass die Person, die dem Zielbild des menschlichen Körpers entspricht, den Sicherheitsgurt trägt.

6. Verfahren nach Anspruch 1, wobei das Zuschneiden (S103) des zu erkennenden Bildes, um basierend auf den Positionsinformationen des Zielgesichtserkennungsfelds das Zielbild des menschlichen Körpers zu erhalten, das dem Zielgesichtserkennungsfeld entspricht, Folgendes einschließt:

Bestimmen (S1031) einer Höhe und Breite des Zielbildes des menschlichen Körpers, das dem menschlichen Zielgesichtserkennungsfeld entspricht, basierend auf einer Höhe und Breite des menschlichen Zielgesichtserkennungsfelds;
wobei ein Verhältnis der Höhe des Zielbildes des menschlichen Körpers zu der Höhe des Zielgesichtserkennungsfelds ein voreingestelltes erstes Verhältnis ist und ein Verhältnis der Breite des Zielgesichtserkennungsfelds zu der Breite des Zielbildes des menschlichen Körpers ein voreingestelltes zweites Verhältnis ist; und
Zuschneiden (S1032) des zu erkennenden Bildes, um basierend auf dem Positionsinformationen des Zielgesichtserkennungsfelds und der Höhe und Breite des Bildes der menschlichen Körperregion das Zielbild des menschlichen Körpers zu erhalten, das dem Zielgesichtserkennungsfeld entspricht.

7. Verfahren nach Anspruch 1, wobei das Verfahren weiter Folgendes umfasst:

Erfassen eines Originalbildes, das durch eine Bildgebungsvorrichtung aufgenommen wurde, die innerhalb eines Fahrzeugs angeordnet ist und dessen Aufnahmeregion die voreingestellte Sitzregion einschließt; und
Durchführen von Affinitätstransformation an dem Originalbild, um das zu erkennende Bild zu erhalten, wobei die voreingestellte Sitzregion in der Mitte des zu erkennenden Bildes gelegen ist.

8. Verfahren nach einem der Ansprüche 1 bis 7, wobei das Segmentieren (S1041) des Zielbildes des menschlichen Körpers, um das Bild der Sicherheitsgurtregion zu erhalten, Folgendes einschließt:

Eingeben des Zielbildes des menschlichen Körpers in ein Modell zur Erkennung des Tragens eines Sicherheitsgurts, um semantische Informationen von jedem Pixel in dem Zielbild des menschlichen Körpers zu erhalten, wobei die semantischen Informationen dazu verwendet werden, einen Typ eines Objekts anzugeben, das dem Pixel entspricht; und Segmentieren des Zielbildes des menschlichen Körpers, um basierend auf den semantischen Informationen von jedem Pixel das Bild der Sicherheitsgurtregion zu erhalten; und
wobei das Durchführen (S101) von Gesichtserkennung an dem zu erkennenden Bild, um die Positionsinformationen des einen oder der mehreren Gesichtserkennungsfelder zu erhalten, Folgendes einschließt:

Eingeben des zu erkennenden Bildes in ein Gesichtserkennungsmodell, um die Positionsinformationen des einen oder der mehreren Gesichtserkennungsfelder zu erhalten.

9. Elektronische Vorrichtung (400), umfassend: einen Prozessor (402) und einen Speicher (401) zum Speichern von Anweisungen, die von dem Prozessor (402) ausgeführt werden; wobei
der Prozessor (402) so konfiguriert ist, dass er die Anweisungen ausführt, um zu bewirken, dass die elektronische Vorrichtung (400) das Verfahren nach einem der Ansprüche 1 bis 8 durchführt.

10. Elektronische Vorrichtung (400) nach Anspruch 9, wobei die elektronische Vorrichtung (400) weiter eine Bildgebungsvorrichtung (101) umfasst, wobei die Bildgebungsvorrichtung (101) und einer der Prozessor (402) und der Speicher (401) eine Datenverbindung dazwischen aufweisen und die Bildgebungsvorrichtung (101) dazu verwendet wird, ein Originalbild aufzunehmen;

wobei die Bildgebungsvorrichtung (101) innerhalb eines Fahrzeugs angeordnet ist und eine Aufnahmeregion der Bildgebungsvorrichtung (101) eine voreingestellte Sitzregion einschließt;
wobei der Prozessor (402) weiter so konfiguriert ist, dass er Affinitätstransformation an dem Originalbild durchführt, um ein zu erkennendes Bild zu erhalten; wobei die voreingestellte Sitzregion in der Mitte des zu erkennenden Bildes gelegen ist.

11. Elektronische Vorrichtung (400) nach Anspruch 10, wobei die Bildgebungsvorrichtung (101) an mindestens einem der folgenden Standorte bereitgestellt ist: A-Säule eines Cockpits (201, 202), einem Armaturenbrett (203), einem Leselicht, einer zentralen Steueranzeige (204) oder einer zentralen Konsole (205).

12. Nichtflüchtiges, computerlesbares Speichermedium, wobei das nichtflüchtige, computerlesbare Speichermedium Computeranweisungen gespeichert aufweist, die, wenn sie auf einer elektronischen Vorrichtung (400) ausgeführt werden, bewirken, dass die elektronische Vorrichtung (400) das Verfahren nach einem der Ansprüche 1 bis 8 durchführt.

13. Computerprogrammprodukt, umfassend Computerprogramm-Anweisungen, wobei die Computerprogramm-Anweisungen, wenn die Computerprogramm-Anweisungen auf einem Computer ausgeführt werden, bewirken, dass der Computer einen oder mehrere Schritte in dem Verfahren nach einem der Ansprüche 1 bis 8 durchführt.

14. Computerprogramm, das, wenn es auf einem Computer ausgeführt wird, bewirkt, dass der Computer einen oder mehrere Schritte in dem Verfahren nach einem der Ansprüche 1 bis 8 durchführt.

**Revendications**

1. Procédé de détection de port de ceinture de sécurité, comprenant :

la réalisation (S101) d'une détection de visage sur une image à détecter pour obtenir des informations de position d'une ou de plusieurs cases de détection de visage ;
la reconnaissance (S102) d'une case de détection de visage cible située dans une région de siège prédéfinie parmi la une ou les plusieurs cases de détection de visage sur la base des informations de position de la une ou des plusieurs cases de détection de visage ;
le recadrage (S103) de l'image à détecter pour obtenir une image de corps humain cible correspondant à la case de détection de visage cible sur la base d'informations de position de la case de détection de visage cible ; et
la segmentation (S104) de l'image de corps humain cible pour obtenir une image de région de ceinture de sécurité, et la détermination de savoir si une personne correspondant à l'image de corps humain cible porte une ceinture de sécurité sur la base de l'image de région de ceinture de sécurité ;
**caractérisé en ce que**
la reconnaissance (S102) de la case de détection de visage cible située dans la région de siège prédéfinie parmi la une ou les plusieurs cases de détection de visage sur la base des informations de position de la une ou des plusieurs cases de détection de visage inclut :

la détermination (S1021), pour chaque case de détection de visage parmi la une ou les plusieurs cases de détection de visage, d'un degré de chevauchement entre la case de détection de visage et la région de siège prédéfinie sur la base d'informations de position de la case de détection de visage et d'informations de position de la région de siège prédéfinie ; et

la détermination (S1022) de la case de détection de visage comme étant la case de détection de visage cible dans un cas où le degré de chevauchement entre la case de détection de visage et la région de siège prédéfinie est supérieur à un premier seuil de degré de chevauchement.

2. Procédé selon la revendication 1, dans lequel la détermination (S104) de savoir si la personne correspondant à l'image de corps humain cible porte la ceinture de sécurité sur la base de l'image de région de ceinture de sécurité inclut :

la détermination (S1042) d'un paramètre d'attribut de la ceinture de sécurité sur la base de l'image de région de ceinture de sécurité ; le paramètre d'attribut de la ceinture de sécurité incluant une pente de la ceinture de sécurité, et la pente de la ceinture de sécurité étant utilisée pour indiquer une inclinaison d'une ligne droite obtenue après qu'un processus d'ajustement est réalisé sur l'image de région de ceinture de sécurité par rapport à un bord inférieur de l'image de corps humain cible ; et

la détermination (S1043) que la personne correspondant à l'image de corps humain cible porte la ceinture de sécurité dans un cas où le paramètre d'attribut de la ceinture de sécurité satisfait une condition prédéfinie ; la condition prédéfinie incluant une première condition prédéfinie, et la première condition prédéfinie incluant que la pente de la ceinture de sécurité est dans une plage prédéfinie.

3. Procédé selon la revendication 2, dans lequel le procédé comprend en outre : la segmentation de l'image de corps humain cible pour obtenir une image de région de corps humain ; dans lequel

le paramètre d'attribut de la ceinture de sécurité inclut en outre au moins l'un des éléments suivants : une zone de l'image de région de ceinture de sécurité, un degré de chevauchement entre l'image de région de ceinture de sécurité et l'image de corps humain cible, et un degré de chevauchement entre l'image de région de ceinture de sécurité et l'image de région de corps humain.

4. Procédé selon la revendication 3, dans lequel la condition prédéfinie inclut en outre une deuxième condition prédéfinie, et la deuxième condition prédéfinie inclut au moins l'un des éléments suivants :

la zone de l'image de région de ceinture de sécurité dépassant un seuil de zone prédéfini ;

le degré de chevauchement entre l'image de région de ceinture de sécurité et l'image de corps humain cible étant supérieur ou égal à un deuxième seuil de degré de chevauchement ; ou

le degré de chevauchement entre l'image de région de ceinture de sécurité et l'image de région de corps humain étant supérieur ou égal à un troisième seuil de degré de chevauchement.

5. Procédé selon la revendication 4, dans lequel la détermination (S1043) que la personne correspondant à l'image de corps humain cible porte la ceinture de sécurité dans le cas où le paramètre d'attribut de la ceinture de sécurité satisfait la condition prédéfinie inclut :

la détermination de savoir si le paramètre d'attribut de la ceinture de sécurité satisfait la première condition prédéfinie ;

dans un cas où le paramètre d'attribut de la ceinture de sécurité ne satisfait pas la première condition prédéfinie, la détermination que la personne correspondant à l'image de corps humain cible ne porte pas la ceinture de sécurité ;

dans un cas où le paramètre d'attribut de la ceinture de sécurité satisfait la première condition prédéfinie, la détermination de savoir si le paramètre d'attribut de la ceinture de sécurité satisfait la deuxième condition prédéfinie ;

dans un cas où le paramètre d'attribut de la ceinture de sécurité ne satisfait pas la deuxième condition prédéfinie, la détermination que la personne correspondant à l'image de corps humain cible ne porte pas la ceinture de sécurité ; et

dans un cas où le paramètre d'attribut de la ceinture de sécurité satisfait la deuxième condition prédéfinie, la détermination que la personne correspondant à l'image de corps humain cible porte la ceinture de sécurité.

6. Procédé selon la revendication 1, dans lequel le recadrage (S103) de l'image à détecter pour obtenir l'image de corps humain cible correspondant à la case de détection de visage cible sur la base des informations de position de la case de détection de visage cible inclut :

la détermination (S1031) d'une hauteur et d'une largeur de l'image de corps humain cible correspondant à la case de détection de visage humain cible sur la base d'une hauteur et d'une largeur de la case de détection de visage humain cible ;

dans lequel un rapport de la hauteur de l'image de corps humain cible à la hauteur de la case de détection de visage cible est un premier rapport prédéfini, et un rapport de la largeur de la case de détection de visage cible à la largeur de l'image de corps humain cible est un deuxième rapport prédéfini ; et

le recadrage (S1032) de l'image à détecter pour obtenir l'image de corps humain cible correspondant à la case de détection de visage cible sur la base des informations de position de la case de détection de visage cible et de la hauteur et de la largeur de l'image de région de corps humain.

7. Procédé selon la revendication 1, dans lequel le procédé comprend en outre :

l'acquisition d'une image originale capturée par un dispositif d'imagerie disposé à l'intérieur d'un véhicule et dont la région de capture inclut la région de siège prédéfinie ; et

la réalisation d'une transformation affine sur l'image originale pour obtenir l'image à détecter, dans lequel la région de siège prédéfinie est située au milieu de l'image à détecter.

8. Procédé selon l'une quelconque des revendications 1 à 7, dans lequel la segmentation (S1041) de l'image de corps humain cible pour obtenir l'image de région de ceinture de sécurité inclut :

l'introduction de l'image de corps humain cible dans un modèle de détection de port de ceinture de sécurité pour obtenir des informations sémantiques de chaque pixel dans l'image de corps humain cible, les informations sémantiques étant utilisées pour indiquer un type d'un objet correspondant au pixel ; et la segmentation de l'image de corps humain cible pour obtenir l'image de région de ceinture de sécurité sur la base des informations sémantiques de chaque pixel ; et

la réalisation (S101) d'une détection de visage sur l'image à détecter pour obtenir les informations de position de la une ou des plusieurs cases de détection de visage inclut :

l'introduction de l'image à détecter dans un modèle de détection de visage pour obtenir les informations de position de la une ou des plusieurs cases de détection de visage.

9. Dispositif électronique (400), comprenant : un processeur (402) et une mémoire (401) pour stocker des instructions exécutées par le processeur (402) ; dans lequel

le processeur (402) est configuré pour exécuter les instructions afin d'amener le dispositif électronique (400) à réaliser le procédé selon l'une quelconque des revendications 1 à 8.

10. Dispositif électronique (400) selon la revendication 9, dans lequel le dispositif électronique (400) comprend en outre un dispositif d'imagerie (101), dans lequel le dispositif d'imagerie (101) et l'un ou l'une du processeur (402) et de la mémoire (401) présentent une liaison de données entre eux,

et le dispositif d'imagerie (101) est utilisé pour capturer une image originale ; le dispositif d'imagerie (101) est disposé à l'intérieur d'un véhicule, et une région de capture du dispositif d'imagerie (101) inclut une région de siège prédéfinie ;

le processeur (402) est en outre configuré pour réaliser une transformation affine sur l'image originale pour obtenir une image à détecter ; la région de siège prédéfinie est située au milieu de l'image à détecter.

11. Dispositif électronique (400) selon la revendication 10, dans lequel le dispositif d'imagerie (101) est prévu au niveau d'au moins l'un des emplacements suivants : montant A d'un habitacle (201, 202), un tableau de bord (203), une lampe de lecture, un affichage de commande central (204) ou une console centrale (205).

12. Support de stockage non transitoire lisible par ordinateur, dans lequel

le support de stockage non transitoire lisible par ordinateur possède des instructions d'ordinateur qui, lorsqu'elles sont mises en œuvre sur un dispositif électronique (400), amènent le dispositif électronique (400) à réaliser le procédé selon l'une quelconque des revendications 1 à 8.

13. Produit de programme informatique, comprenant des instructions de programme informatique, dans lequel lorsqu'elles sont exécutées sur un ordinateur, les instructions de programme informatique amènent l'ordinateur à réaliser une ou plusieurs étapes dans le procédé selon l'une quelconque des revendications 1 à 8.

14. Programme informatique, lorsqu'il est exécuté sur un ordinateur, amenant l'ordinateur à réaliser une ou plusieurs étapes dans le procédé selon l'une quelconque des revendications 1 à 8.

FIG. 1

FIG. 2

Perform face detection on an image to be detected to obtain position information of one or more face detection boxes

S101

Based on the position information of the one or more face detection boxes, recognize a target face detection box located in a preset seat region from the one or more face detection boxes

S102

Based on the position information of the target face detection box, crop the image to be detected to obtain a target human body image corresponding to the target face detection box

S103

Segment the target human body image to obtain a seat belt region image, and determine whether a person corresponding to the target human body image wears a seat belt based on the seat belt region image

S104

FIG. 3

Perform face detection on an image to be detected to obtain position information of one or more face detection boxes

S101

For each face detection window in the one or more face detection boxes, determine an overlap degree between the face detection box and the preset seat region based on position information of the face detection box and position information of the preset seat region

S1021

In a case where the overlap degree between the face detection box and the preset seat region is greater than a first overlap degree threshold, determine the face detection box as the target face detection box

S1022

Based on the position information of the target face detection box, crop the image to be detected to obtain a target human body image corresponding to the target face detection box

S103

Segment the target human body image to obtain a seat belt region image, and determine whether a person corresponding to the target human body image wears a seat belt based on the seat belt region image

S104

FIG. 4

Perform face detection on an image to be detected to obtain position information of one or more face detection boxes $\quad$ S101

Based on the position information of the one or more face detection boxes, recognize a target face detection box located in a preset seat region from the one or more face detection boxes $\quad$ S102

Based on a height and width of the target face detection box, determine a height and width of the target human body image corresponding to the target face detection box $\quad$ S1031

Based on the position information of the target face detection box and the height and width of the target human body image, crop the image to be detected to obtain the target human body image corresponding to the target face detection box $\quad$ S1032

Segment the target human body image to obtain a seat belt region image, and determine whether a person corresponding to the target human body image wears a seat belt based on the seat belt region image $\quad$ S104

FIG. 5

$(x3-w/2,y3)$    $(x3,y3)$        $(x4,y3)$  $(x4+w/2,y3)$

Target face
detection box

$(x3,y4)$        $(x4,y4)$

Human body region image

$(x3-w/2,y3+h)$                    $(x4+w/2,y3+h)$

FIG. 6

Perform face detection on an image to be detected to obtain position information of one or more face detection boxes — S101

Based on the position information of the one or more face detection boxes, recognize a target face detection box located in a preset seat region from the one or more face detection boxes — S102

Based on the position information of the target face detection box, crop the image to be detected to obtain a target human body image corresponding to the target face detection box — S103

Segment the target human body image to obtain the seat belt region image — S1041

Determine an attribute parameter of the seat belt based on the seat belt region image — S1042

In a case where the attribute parameter of the seat belt satisfies a preset condition, it is determined that the person corresponding to the target human body image wears the seat belt — S1043

FIG. 7

```
┌────────────────────────────────────────────────┐
│              Obtain a sample set                 │─── S201
└────────────────────────────────────────────────┘
                        │
                        ▼
┌────────────────────────────────────────────────┐
│  Perform an image preprocessing on an image in each │
│  sample in the sample set to obtain a preprocessed image │─── S202
└────────────────────────────────────────────────┘
                        │
                        ▼
┌────────────────────────────────────────────────┐
│  Input the preprocessed image into a model to be trained │
│  to obtain a prediction result corresponding to the sample │─── S203
└────────────────────────────────────────────────┘
                        │
                        ▼
┌────────────────────────────────────────────────┐
│  Determine a loss value output by the model based on │
│  cross entropy between the prediction result corresponding │─── S204
│  to the sample and the label corresponding to the sample │
└────────────────────────────────────────────────┘
                        │
                        ▼
┌────────────────────────────────────────────────┐
│  Determine the gradient of the weight of each node in the │
│  model to be trained based on the loss value output by the │
│  model, and update the weight of each node in the model │─── S205
│  to be trained based on the obtained gradient │
└────────────────────────────────────────────────┘
```

FIG. 8

Perform face detection on an image to be detected to obtain position information of one or more face detection boxes `S101`

Based on the position information of the one or more face detection boxes, recognize a target face detection box located in a preset seat region from the one or more face detection boxes `S102`

Based on the position information of the target face detection box, crop the image to be detected to obtain a target human body image corresponding to the target face detection box `S103`

Segment the target human body image to obtain a seat belt region image, and determine whether a person corresponding to the target human body image wears a seat belt based on the seat belt region image `S104`

In response to detecting that the vehicle is in a driving state and the person corresponding to the target human body image does not wear the seat belt, send alarm information for reminding the person to wear the seat belt `S105`

FIG. 9

FIG. 10

Seat belt wearing
detection apparatus 300

Imaging module ⌐304

Preprocessing
module ⌐305

Face detection
module ⌐301

Human body
detection module ⌐302

Wearing detection
module ⌐303

Alarm module ⌐306

FIG. 11

400

402          403

404     Processor     Communication
interface

Bus

Memory

401

FIG. 12

**EP 4 517 700 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022135589 A1
- US 2021209385 A1
- CN 106709443 B
- CN 104417489 A